# EUROPEAN PATENT SPECIFICATION

(11) **EP 1 293 246 B1**
(45) Date of publication and mention of the grant of the patent: **19.08.2015**
(21) Application number: 02026959.3
(22) Date of filing: 16.07.1998
(51) Int. Cl.: B01J 8/00, B01J 8/02, B01J 8/04, B01J 8/26, B01D 39/20, C10G 49/00

(54) **Flow distribution method for chemical reactors**
Verfahren zum Strömungsverteilen für chemische Reaktoren
Procédé de distribution pour des reacteurs chimiques

(30) Priority: 18.07.1997 US 52969
(43) Date of publication of application: 19.03.2003
(62) Divisional of application: 98934597.0
(73) Proprietor: Crystaphase International, Inc., Houston, TX 77060 (US)
(72) Inventor: Glover, John N., Texas 77379 (US)
(74) Representative: Brown, David Leslie

(56) References cited:
- EP-A- 0 260 826
- EP-A- 0 639 544
- EP-A- 0 719 578
- FR-A- 2 480 137
- GB-A- 2 108 003
- GB-A- 2 149 771

## Description

### BACKGROUND OF THE INVENTION

### 1. Field Of The Invention

The invention relates to a method of providing flow distribution of organic-based feed streams to chemical reactors. More particularly, the invention relates to a method for filtering solids and providing liquid distribution for organic-based feed streams that are subsequently processed in chemical reactors having discrete solid element catalyst bed(s).

### 2. Description Of Related Art

Typically chemical reactor beds include discrete solid catalyst particles contained in one or more fixed beds. Often these beds are supported, or retained, at their inlet and/or outlet by materials which are inert to the reaction. These inert materials may trap all or some solid contaminants such as dirt, iron oxide, iron sulfide, asphaltenes, coke fines, catalyst fines, sediments or other entrained foreign particulate material in the reactor feed stream. The trapping of the contaminants is to prevent undesirable material from plugging, poisoning or otherwise deactivating the catalyst bed. The inert materials, or inerts, traditionally used are typically made of conventional ceramic materials in the form of pellets or spheres and typically must be resistant to crushing, high temperatures and/or high pressures. In addition, these materials may facilitate distribution of the feed stream across the catalyst bed in such a manner to reduce channeling through the catalyst bed.

To increase the efficiency of the inerts, graduated layers of inerts in different sizes and shapes along with perforated discs, or screen baskets, have been used to retard the surface of a catalyst bed from becoming plugged with contaminants such as dirt, iron oxide, iron sulfide, asphaltenes, coke fines, catalyst fines, sediments, or other entrained foreign particulate material. Skimming, or removal, of the top portion of the catalyst is required when the filtering capacity of the inerts is exhausted resulting in the catalyst itself being used as a filter. In addition to catalyst fouling by particulate matter in the organic-based stream, polymerization of polymer precursors, e.g., diolefins, found in the organic-based feed stream may also foul the catalyst. In particular, two mechanisms of polymerization, free radical polymerization and condensation-type polymerization, may cause catalyst bed fouling, gumming or plugging. The addition of antioxidants to control free radical polymerization has been found useful where the organic-based feed stream has encountered oxygen. Condensation polymerization of diolefins typically occurs after the organic-based feed is heated. Therefore, filtering prior to the organic-based feed stream entering the reactor may not be helpful to remove these foulants as the polymerization reactions generally take place in the reactors. GB2108003 discloses a packed bed reactor for solids-containing feeds using a "guard bed" arrangement placed upstream of a packed bed reactor.

It is highly desirable to increase the efficiency of the inert bed filtration and to control the rate of reaction of the diolefins or other polymer precursors. Thus, the development of a method of filtration that increases the efficiency of the filtering of the contaminated feed stream may also reduce the volume of inerts required to protect the catalyst bed from solid deposition, as well as reduce the pressure drop associated with plugging. The method of the present invention for filtration and flow distribution for chemical reactors, when compared with previously proposed prior art methods, has the advantages of: providing more efficient filtering; increasing catalyst life; decreasing catalyst losses; and reducing the need to take the reactor off-line for maintenance when removal or replacement of the inert material or any catalyst that is plugged is required. These benefits may result in both capital and operating savings.

Disadvantages associated with current liquid distribution designs and methods in fixed bed chemical reactors may result in poor liquid distribution to the catalyst bed. Partial plugging of the catalyst bed with contaminants, or gumming by reactive diolefins or other polymer precursors, may also cause maldistribution. The maldistribution may result in channeling and corresponding bypassing of portions of the catalyst bed, reducing the catalyst efficiency. Usually a maldistribution problem is evidenced by radial temperature differences. Therefore, the art has sought a flow distribution method that may spread the liquid more uniformly through the catalyst bed, provide efficient filtering and reduce fouling caused by undesired polymerization reactions.

Accordingly, prior to the development of the present invention, there has been no method for filtering and/or distributing organic-based feed streams to chemical reactors which: may capture a mixture of large and small contaminants without plugging or blinding; does not cause relatively large pressure drops across the filtering and/or distribution media; does not require excessive capital and operating costs; and does not cause process safety and environmental concerns arising from maintenance required shutdowns and start-ups. Therefore, the art has sought a method for extending the run life of catalyst beds by filtering and distributing organic-based feed streams to chemical reactors which: does not require excessive amounts of catalyst; does not require the use of relatively large amounts of inert material; does not cause relatively large pressure drops across the bed; does not require relatively large capacity circulation pumps or compressors; and does not cause process safety and environmental concerns arising from reactor shutdowns and start-ups.

EP 0260826 describes a catalyst comprising a ceramic material, comprising or supporting the active catalytic material, wherein the ceramic material is a foam having a network of irregular passages. It is stated that the catalytic material can be used in a reforming process of hydrocarbons.

### SUMMARY OF INVENTION

In accordance with the invention, the foregoing advantages have been achieved through the present method of filtering and distributing an organic-based feed for chemical reactors. The present invention provides a method of fluid distribution in a chemical reactor comprising the steps of:
(a) providing a layer of reticulated ceramic material in the chemical reactor, the reticulated ceramic material having a plurality of web members defining a plurality of flow passageways through the reticulated ceramic material and the reticulated ceramic material having a pore distribution range of about 10 to 800 pores per linear 25.4 mm (per linear inch);
(b) contacting an organic-based liquid, organic-based vapour, or organic-based combination liquid and vapour feed stream with the layer of reticulated ceramic material;
(c) subdividing the organic-based liquid, organic-based vapour, or organic-based combination liquid and vapour feed stream into a plurality of smaller fluid steams by passing the organic-based liquid, organic-based vapour, or organic-based combination liquid and vapour feed stream through the plurality of flow passageways defined by the web members of the reticulated ceramic material;
wherein the organic-based liquid, organic-based vapour, or organic-based combination liquid and vapour feed stream is a contaminated organic-based feed stream and the method includes the steps of:
removing contaminants from the contaminated organic-based feed stream; and
providing a resultant decontaminated and uniformly spread organic-based feed stream to a catalyst bed for further processing in the chemical reactor.

The reticulated ceramic material may be made from any commercially available materials, for example, ZTA. The ZTA may have a product composition of ZrO₂/Al₂O₃ and is available from SELEE Corporation headquartered in Hendersonville, North Carolina. The organic-based feed stream may be an organic-based liquid, a vapor phase, or both, and the contaminants may include dirt, iron oxide, iron sulfide, asphaltenes, coke fines, catalyst fines, sediments or other entrained foreign particulate matter, or polymer precursors such as diolefins. The reticulated ceramic material should be provided in a layer in an amount sufficient to remove some or all of the contaminants from the organic-based feed stream.

More particularly, the invention improves feed quality of organic-based feed streams to chemical reactors. Preferably, the chemical reactors use discrete solid element catalyst beds. The chemical reactors may include hydrotreater, hydrorefiner, hydrocracker, reformer, alkylation, isomerization, and polymerization reactors. The discrete solid catalyst particles may be contained in one or more fixed beds and in either an upflow, downflow or radial flow design.

An additional feature of the present invention may include the step of using reticulated ceramics in a variety of shapes and porosities. The shapes may include substantially spherical-shaped balls, raschig rings, saddles, hollow cylinders, perforated disks, disks, single sheets, and solid cylinders, among others. Each shape may be sized to individual specifications. Sizes for the shapes used may include substantially spherical balls of about 3.2 to 50.8 mm (1/8 to 2-inch) diameters; raschig rings with inside diameters of about 3.2 to 25.4 mm (1/8 to 1 inch) and outside diameters of about 6.35 to 38.1 mm (1/4 to 1 ½ inches), and heights of about 6.35 to 50.8 mm (1/4 to 2 inches); saddle shapes with radii of about 6.35 to 50.8 mm (1/4 to 2 inches); hollow cylinders having inside diameters of about 1.25 to 31.75 mm (1/8 to 1 1/4 inches), outside diameters of about 6.35 to 50.8 mm (1/4 to 2 inches), and heights of about 6.35 to 76.2 mm (1/4 to 3 inches); and solid cylinders having diameters of about 3.2 to 25.4 mm (1/8 to 1 inch) and heights of about 6.35 to 50.8 mm (1/4 to 2 inches). Custom-made one-piece disks or single sheet construction may be custom-fit to the physical configuration of a reactor. A further feature of this aspect of the present invention is that the reticulated ceramic material may be formed in either a disk or single sheet, each optionally having perforations. An additional feature of the present invention is that the reticulated ceramic material when constructed may be formed into a plurality of segments in order to form an assembled sheet or disk that is custom-fit to the reactor's physical configuration. Porosities of the reticulated ceramic material range from 10 to 800 pores per linear 25.4 mm (10 to 800 pores per linear inch ("ppi")). Preferably the pore distribution may range from about 10 to 80 pores per linear 25.4 mm (10 to 80 ppi). More preferably, the pore distribution may range from about 20 to 60 pores per linear 25.4 mm (20 to 60 ppi). This enables customization of the size and shape of the reticulated ceramic material for the application, particulate loading and pressure drop constraints.

In accordance with another aspect of the present invention, entrance losses may be reduced for vapor feed streams to chemical reactors, preferably fluidized bed reactors. This advantage of the present invention may be achieved by reducing the turbulence in the vapor and air inlets to the reactors. This aspect of the present invention may include the further steps of: subdividing the feed stream into a plurality of smaller fluid streams by passing the feed stream through the plurality of flow passageways defined by the web members of the reticulated ceramic material; and discharging the streamlined vapor feed stream into the chemical reactor. The method of the present invention for distributing turbulent air or vapor flows to a reactor inlet has the advantages of reducing maldistribution and entrance losses, thus allowing for reduced compressor horsepower usage or allowing for larger flow rates, depending on the process constraints of the compressor and associated piping.

In accordance with another aspect of the present invention, the step of contacting the contaminated organic-based feed stream with the reticulated ceramic material may include depositing a catalyst on the reticulated ceramic material prior to contacting the contaminated organic-based feed stream. Another feature of this aspect of the present invention may include the use of a reticulated ceramic material as a substrate having a substantially uniform coating of a selected catalyst including a porous alumina coating with a Group VI-B metal or a Group VIII metal, or both. Preferably, the Group VI-B metal is molybdenum and preferably, the Group VIII metal is either nickel or cobalt. More preferably, the Group VI-B metal and Group VIII metal are impregnated into the reticulated ceramic material. The method of the present invention is useful to extend the run life of the catalyst bed. The catalytically active reticulated ceramic material may be utilized to react diolefins or other polymer precursors and also to act as a filter and distributor. By filtering solids and partially reacting any polymer precursors, e.g., diolefins, fouling of the bed is reduced, effectively extending the run time of the reactor.

The method of the present invention for filtering organic-based feed streams in chemical reactors, when compared with prior art methods, has the advantages of: reducing the volume of inert materials required; lowering capital costs; improving the filtration of the solid particular matter from the feed streams; decreasing the pressure drop across the system; increasing run time of the reactor; lowering operating costs; increasing process safety; and reducing environmental concerns.

### BRIEF DESCRIPTION OF DRAWINGS

In the drawings:
FIG. 1 is partial a cross-sectional side view of a single fixed bed chemical reactor showing a specific embodiment of the present invention;
FIG. 2 is a partial cross-sectional side view of a multiple fixed bed chemical reactor showing another embodiment of the present invention;
FIG. 3 is a partial cross-sectional side view of a combustor-style regenerator fluidized bed reactor;
FIG. 4 is a partial cross-sectional side view of a two-stage regenerator fluidized bed reactor;
FIG. 5 is a partial cross-sectional side view of a radial flow reactor showing another embodiment of the present invention;
FIG. 6 is a perspective view of a perforated disk made of reticulated ceramic material in accordance with the present invention;
FIG. 7 is a perspective view of a saddle made of reticulated ceramic material in accordance with the present invention;
FIG. 8 is a perspective view of a hollow cylinder made of reticulated ceramic material in accordance with the present invention;
FIG. 9 is a perspective view of an example of a one-piece sheet made of reticulated ceramic material in accordance with the present invention;
FIG. 10 is a perspective view of an assembled disk made of reticulated ceramic material in accordance with the present invention;
FIG. 11 is a perspective view of balls made of reticulated ceramic material in accordance with the present invention;
FIG. 12 is a perspective view of a solid cylinder made of reticulated ceramic material in accordance with the present invention; and
FIG. 13 is a perspective view of a hollow cylinder made of reticulated ceramic material in accordance with the present invention.

While the invention will be described in connection with the preferred embodiment, it will be understood that it is not intended to limit the invention to that embodiment. On the contrary, it is intended to cover all alternatives, modifications, and equivalents, as may be included within the scope of the invention as defined by the appended claims.

### DETAILED DESCRIPTION AND SPECIFIC EMBODIMENTS

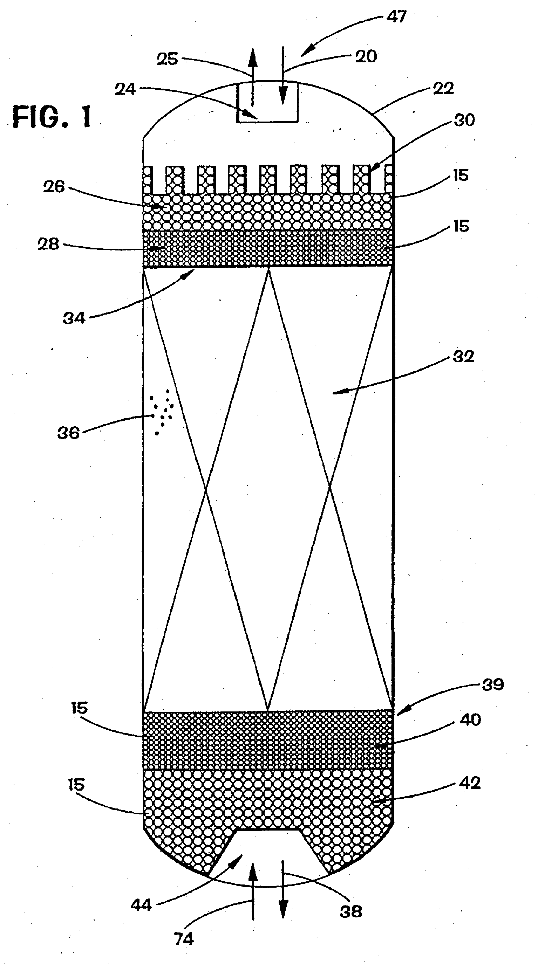

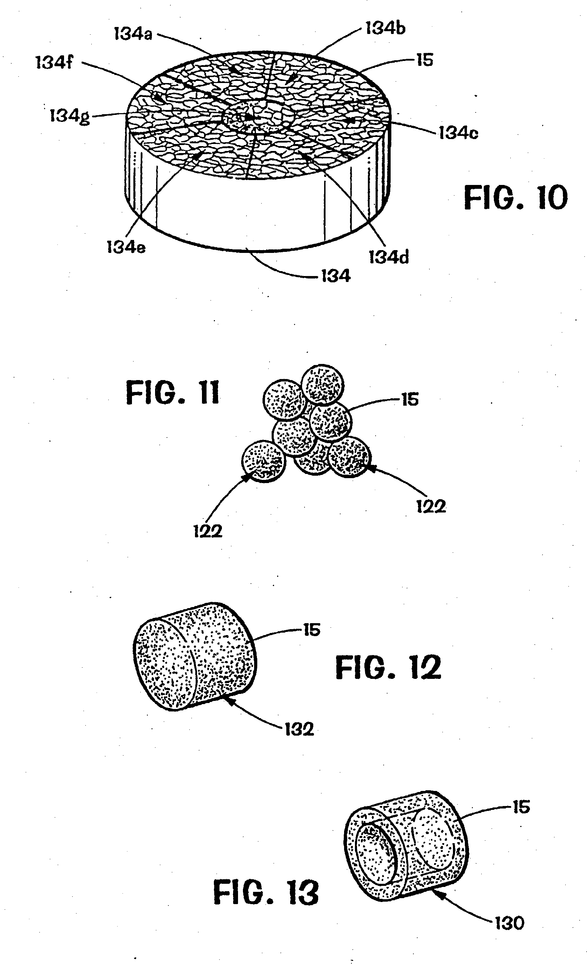

With reference to FIG. 1, for treatment of an organic-based feed stream a single fixed bed chemical reactor 22 with reticulated ceramic material 15 in the shape of substantially spherical balls 122 (FIG. 11) will be described, although as previously discussed other shapes of the reticulated ceramic material 15 may be used. If the reactor 22 is of a downflow configuration, the contaminated organic-based feed stream 20 will enter the reactor 22 at the inlet 24. The invention may be used in either fixed beds or fluidized bed chemical reactors. Preferably, the present invention is used in one or more fixed beds, in either an upflow or downflow or radial flow configuration. Preferably, the chemical reactors include hydrotreater, hydrorefmer, hydrocracker, reformer, alkylation, isomerization and polymerization reactors. Contaminants typically found in the feed stream include dirt, iron oxide, iron sulfide, asphaltenes, coke fines, catalyst fines, sediments or other entrained foreign particulate material. A layer 26, preferably layers 26, 28, of reticulated ceramic material 15 is provided in the vessel in an amount sufficient to filter the contaminants from the organic-based feed stream 20. Preferably, multiple layers 26, 28 may be provided wherein the size of the articles of reticulated ceramic material 15 such as balls 122 is graduated from a larger size in layer 26 to a smaller size in layer 28 as the incoming organic-based feed stream flows through the reticulated ceramic material 15. The reticulated ceramic material may be made from any commercially available materials, for example, ZTA. The ZTA may have a product composition of ZrO₂/Al₃ and is available from SELEE Corporation headquartered in Hendersonville, North Carolina. The graduated sizing of the reticulated ceramic material 15 from large sizes to small sizes lessens the pressure drop through the reactor attributable to filtering of the suspended solids. Optionally, the pore size of the reticulated ceramic material may also be graduated from large pores (low ppi) to small pores (high ppi) to lessen the pressure drop through the reactor attributable to filtering of the suspended solids. Optionally, the present invention may be practiced with or without conventional basket screens 30.

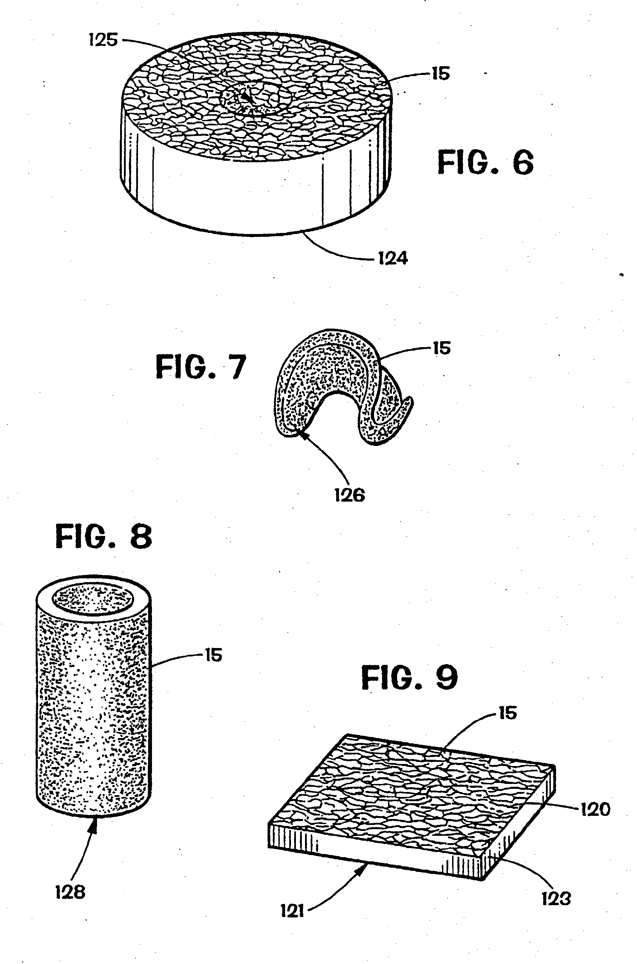

Still with reference to FIG. 1, unless otherwise noted, in addition to filtering the contaminated organic-based feed stream 20, the reticulated ceramic material 15 may also enable a uniform distribution and flow of the incoming organic-based feed stream 20 to the catalyst bed 32. By passing the organic-based feed stream through a plurality of flow passageways 120 (FIG. 9) defined by web members 123 (FIG. 9) of the reticulated ceramic material 15 in layers 26, 28, the incoming organic-based feed stream 20 may also be distributed by subdividing the incoming organic-based feed into a plurality of smaller fluid streams and then resubdividing, a plurality of times, the smaller streams so that the incoming organic-based feed stream is spread uniformly across the fluid entry cross-section 34 of the catalyst bed 32. The organic-based feed stream 20 is reacted in the catalyst bed 32. Preferably the catalyst bed 32 contains discrete solid catalyst particles 36.

The reticulated ceramic material 15 may be used to filter and retain catalyst 36 from the outgoing reacted organic-based stream 38. Small particles of the catalyst material 36 which may be entrained in the reacted organic-based stream may be filtered, or captured, from the reacted organic-based stream 38 and retained by reticulated ceramic material layers 40, 42. Preferably, the size of the reticulated ceramic material in layers 40, 42 is graduated from a smaller size in layer 40 to a larger size in layer 42 at the outlet 44 of the reactor 22 to effectively retain the catalyst 36. In addition, sediments of material may form in the reactor bed, e.g., sediments formed by excessive hydrocracking of residual oils, that may plug or foul downstream equipment. These sediments may be filtered from the outgoing reacted organic-based stream 38 by the reticulated ceramic material 15. Preferably, the size of the reticulated ceramic material in layers 40, 42 is graduated from a smaller size in layer 40 to a larger size in layer 42 at the outlet 44 of the reactor 22 to effectively retain the catalyst 36, while the pore size of the reticulated ceramic material is inversely graduated, preferably about 10 to30 ppi to filter the sediments. More preferably, the pore size range is about 40 to 80 ppi. Alternately, the invention may also be used in an upflow reactor configuration wherein the contaminated organic-based feed 74 would instead enter the vessel at the outlet 44 at the lower end 39 and the reacted organic-based stream 25 would exit the reactor at the inlet 24 at the upper end 47 of reactor 22.

As previously discussed, another advantage of the present invention is to react partially activated or activated reticulated ceramic material 15 with polymer precursors in a contaminated organic-based feed stream 20. Condensation polymerization of diolefins may occur in the reactor bed 32 after the contaminated organic-based feed stream 20 is heated, generally prior to introduction into the chemical reactor 22, thereby forming foulants in the reactor bed 32 itself which may gum or plug the bed 32. As the foulants form in the bed, they cannot be filtered from the contaminated organic-based feed stream 20 before flowing across the fluid entry cross-section 34. Therefore, the layer or layers 26, 28, 40, 42 of reticulated ceramic material 15 may be coated with an alumina powder which may also act as a substrate for catalyst materials to form partially activated reticulated ceramic material. As used herein, an "activated support" means a reticulated ceramic material which has been impregnated with catalyst materials, or a reticulated ceramic material which may be an oxide, nitride, or carbide of a metal or a reticulated ceramic material which contains zeolite or inorganic oxides, e.g., alumina, silica, silica-alumina, magnesia, silica-magnesia or titania. As used herein, a "partially activated support" means an activated support material which has been purposefully made less active or partially deactivated in order to achieve a slower reaction rate or to partially react the materials contacted.

Coated reticulated ceramic material 15 may also be used, wherein the coating may comprise one of several conventional catalysts. Alumina may be used as an active coating, optionally but preferably, alumina may be used as a support. The catalyst according to this invention preferably comprises a metal of Group VI-B or a member of Group VIII, or both, impregnated into an alumina-based support. Accordingly, the catalyst may comprise at least one of chromium, molybdenum and tungsten in combination with at least one of iron, nickel, cobalt, platinum, palladium and iridium. Of the Group VI-B metals, molybdenum is most preferred. The catalyst preferably will contain from about 2% to about 14% by weight of Group VI-B metal. Of the Group VIII metals, nickel and cobalt are most preferred. The amount of Group VIII metal in the catalyst is preferably from about 0.5% to about 10% by weight.

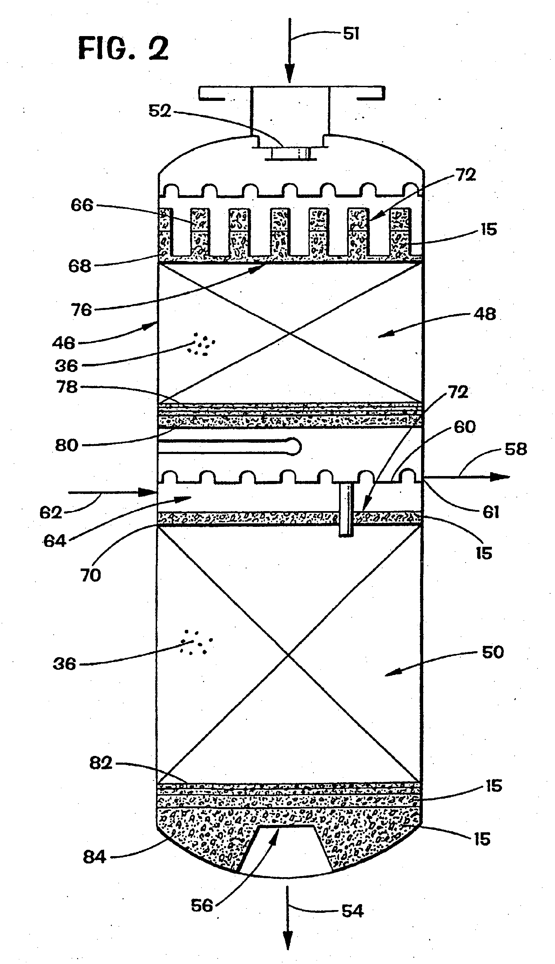

With reference to FIG. 2, a multiple fixed bed chemical reactor 46 having two fixed catalyst beds 48, 50 with reticulated ceramic material 15 in the shape of saddles 126 (FIG. 7) will be described. The reactor 46 is illustrated in a downflow configuration, wherein the contaminated organic-based feed stream 51 will enter the reactor 46 at the inlet 52 and the reacted organic-based stream 54 will exit the reactor at the outlets 56, 61. A partially reacted organic-based stream 58 may be accumulated at the outlet 61 of the first fixed bed 48 and withdrawn at the collector tray 60. The partially reacted organic-based stream 58 may be heated or quenched or otherwise treated before reintroduction into the reactor 46 as a partially reacted organic-based feed stream 62 at the mixing chamber 64. The partially reacted organic-based stream 58 may be removed for redistribution, heating, or other processing steps as required before reintroducing the partially reacted organic-based feed stream 62 into the reactor 46 for reaction with a succeeding catalyst bed 50. An additional layer 70 of reticulated ceramic material 15 may be provided for filtration and distribution to remove any contaminants entrained from or formed by the processing equipment used in the additional processing steps such as dirt, iron oxide, iron sulfide, asphaltenes, coke fines, catalyst fines, sediments, or other entrained foreign particulate material.

Layers 66, 68, 70 of reticulated ceramic material 15 are provided in the reactor 46 below the inlet 52 and mixing chamber 64 in an amount sufficient to filter the organic-based feed stream 51 and the partially reacted organic-based feed stream 62. Preferably, the multiple layers 66, 68, 70 are provided such that the size of the reticulated ceramic material 15 is graduated from a larger size in layer 66 to a smaller size in layer 68 as the incoming contaminated organic-based feed flows through the reticulated ceramic material 15. Optionally, the present invention may be practiced with or without conventional basket screens 72. Preferably, the fixed catalyst beds 48, 50 contain discrete solid catalyst particles 36.

As previously discussed, an advantage of the present invention is that it may also be used to distribute the organic-based feed stream. The organic-based feed stream 51 may also be distributed while being filtered by subdividing the incoming organic-based feed into a plurality of smaller fluid streams by passing the organic-based feed stream through a plurality of flow passageways 120 (FIG. 9) defined by the web members 123 (FIG. 9) of the reticulated ceramic material 15; then resubdividing, a plurality of times, the smaller streams so that the incoming organic-based feed stream is spread uniformly across the fluid entry cross-section of the catalyst bed 76. The organic-based feed 51 is then reacted in the catalyst bed 48, before being withdrawn as a partially reacted organic-based stream 58 at the collector tray 60. The method of filtration and distribution is then repeated for the partially reacted organic-based feed stream 62 as it flows into the mixing chamber 64 and passes through the reticulated ceramic material layer 70.

Another feature of the present invention is that the reticulated ceramic material 15 may also be used to capture and retain catalyst particles 36 from the outflowing partially reacted organic-based stream 58 and the reacted organic-based stream 54. The small reticulated ceramic material saddles 126 in layers 78, 80 at the outlet 61 of the first fixed bed 48 and the small saddles 126 in layers 82, 84 at the outlet 56 of the second fixed bed 50 are used to filter and retain catalyst particles 36 which may be entrained in the partially reacted organic-based stream 58 or reacted organic-based stream 54. As discussed with reference to FIG. 1, for capturing and retaining catalyst 36 from a partially reacted or a reacted outflowing organic-based stream in either a single or a multiple fixed bed chemical reactor, the reticulated ceramic material 15 is preferably graduated from small to larger sizes as shown in FIG. 2 for layers 78, 80 and 82, 84, respectively for each bed 48, 50. Optionally, the pore size of the reticulated ceramic material may also be graduated from small pores to large pores. Alternatively, the pore size of the reticulated ceramic material may be inversely graduated from large pores to small pores to filter sediments that may form in the catalyst bed. A further advantage of the present invention is that the reticulated ceramic material 15 may be activated or impregnated with catalyst to react with polymer precursors in organic-based feed streams 51, 62. As depicted in FIG. 2, layers 66, 68, 70 of reticulated ceramic material 15 may contain an activated support including inorganic oxides preferably selected from the group consisting of alumina, silica, silica-alumina, magnesia, silica-magnesia or titania or zeolites preferably selected from the group consisting of zeolite L, zeolite X, and zeolite Y, which may be added to the reticulated ceramic material as a substrate for catalyst materials. Optionally, the reticulated ceramic material may be impregnated with catalyst materials or the reticulated ceramic material may be an oxide, nitride, carbide or boride of a metal as disclosed in U.S. Patent No. 5,399,535, which is hereby incorporated by reference to the extent it is not inconsistent with the present invention.

Activated or partially activated reticulated ceramic material as described above may be used to control the hydrogenation rate of the diolefins or other polymer precursors to prevent fouling or gum formation. When endothermic reactions require the addition of heat to the partially reacted organic-based stream 58, preferably the reticulated ceramic material 15 of layer 70 is also activated or partially activated. The invention may also be practiced with coated reticulated ceramic material, wherein the coating may comprise one of several conventional catalysts. Alumina may be used on an active coating or support. The catalyst according to this invention preferably comprises a metal of Group VI-B or a member of Group VIII, or both, impregnated into the reticulated ceramic material, inorganic oxide or zeolite. Accordingly, the catalyst may comprise at least one of chromium, molybdenum and tungsten in combination with at least one of iron, nickel, cobalt, platinum, palladium and iridium. Of the Group VI-B metals, molybdenum is most preferred. The catalyst preferably will contain from about 2% to about 14% by weight of Group VI-B metal. Of the Group VIII metals, nickel and cobalt are most preferred. The amount of Group VIII metal in the catalyst is preferably from about 0.5% to about 10% by weight.

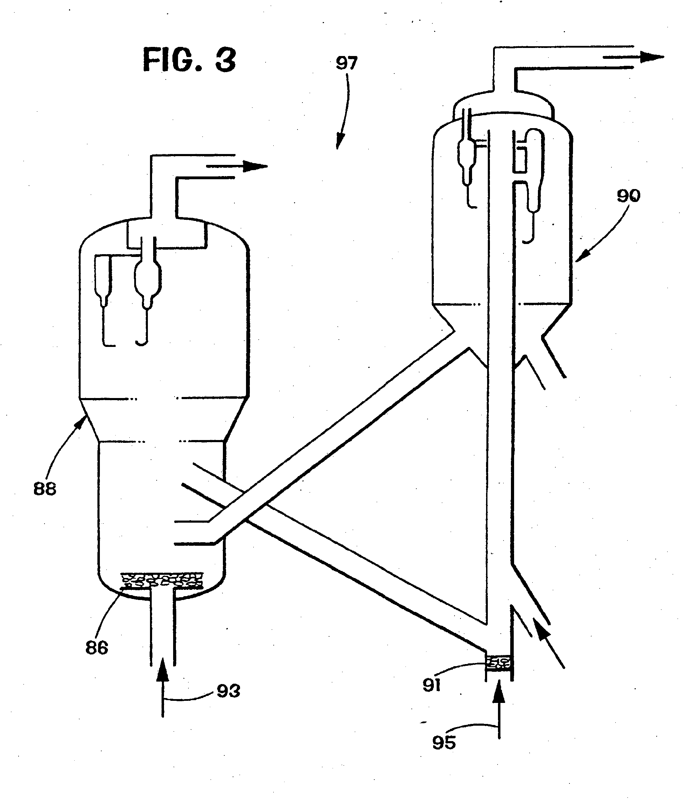

FIG. 3 illustrates a conventional combustor-style fluidized bed reactor 88, 90. Layers 86, 91 of reticulated ceramic material 15 may be used in fluidized bed chemical reactors 90 and in a combustor, or regenerator 88, to reduce entrance losses and maldistribution of the vapor or air flows. The inlet air 93 to the combustor or regenerator 88 is flowed through the reticulated ceramic material layer 86 to subdivide the stream into a plurality of smaller flowing streams. The reticulated ceramic material 15 may be a single circular disk 124 (FIG. 6) without the illustrated perforation 125; however it may be an oval or square sheet 121 (FIG. 9), or any geometric configuration desired including an assembled disk 134 (FIG. 10). Optionally, multiple disks 86, 91 (FIG. 3) may be used. Also, the disk 124 (FIG. 6) or sheet 121 (FIG. 9) may optionally contain perforations. The subdivision of the vapor or air flows may reduce the turbulence of the incoming vapor or air streams, thus reducing the compressor horsepower usage or allowing for an increase in flow rate, depending on the process constraints of the particular combustor-style fluidized bed reactor (FIG. 3). A further advantage of the present invention is that the subdivided vapor or air flows may more uniformly distribute the vapor or air 93 throughout the combustor or regenerator 88. In addition, another layer 91 of reticulated ceramic material 15 may be used to uniformly distribute any fluffing vapors 95 used in the fluidized bed reactor 90.

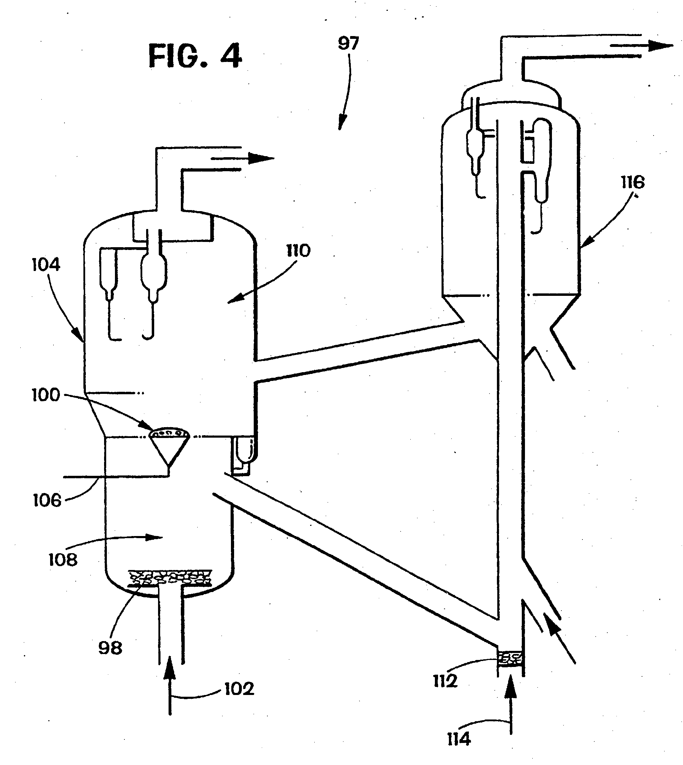

Alternatively, in FIG. 4 which depicts a conventional two-stage regenerator fluidized bed reactor 97, layers 98, 112 of the reticulated ceramic material 15 may be used similarly as discussed in FIG. 3 for a single-stage combustor or regenerator. The turbulent inlet air 102 to the combustor or regenerator first stage 108 is flowed through the layer 98 of reticulated ceramic material 15 to subdivide the stream, preferably into a plurality of smaller flowing streams. Preferably, the reticulated ceramic material 15 is a single circular disk 124 (FIG. 6) without the perforations 125; however it may be an oval or square sheet 121 (FIG. 9), or any geometric configuration desired including an assembled disk 134 (FIG. 10). Optionally, multiple disks 98, 112 (FIG. 4) may be used. Also, the disk 124 (FIG. 6) or sheet 121 (FIG. 9) may optionally contain perforations. Similarly, for the second-stage 110, the turbulent inlet air 106 may be flowed through the layer 100 of reticulated ceramic material 15 to subdivide the stream into a plurality of smaller flowing streams. The subdivision of the vapor or air flows may reduce the turbulence of the incoming vapor or air streams, thus reducing the compressor horsepower usage or allowing for an increase in flow rate, depending on the process constraints of the two-stage regenerator 104 or fluidized bed reactor 116. A further advantage of the present invention is that the subdivided vapor or air flows may more uniformly distribute the vapor or air throughout the combustor or regenerator chambers 108, 110. In addition, another layer 112 of reticulated ceramic material 15 may be used to uniformly distribute any fluffing vapors 114 used in the fluidized bed reactor 116.

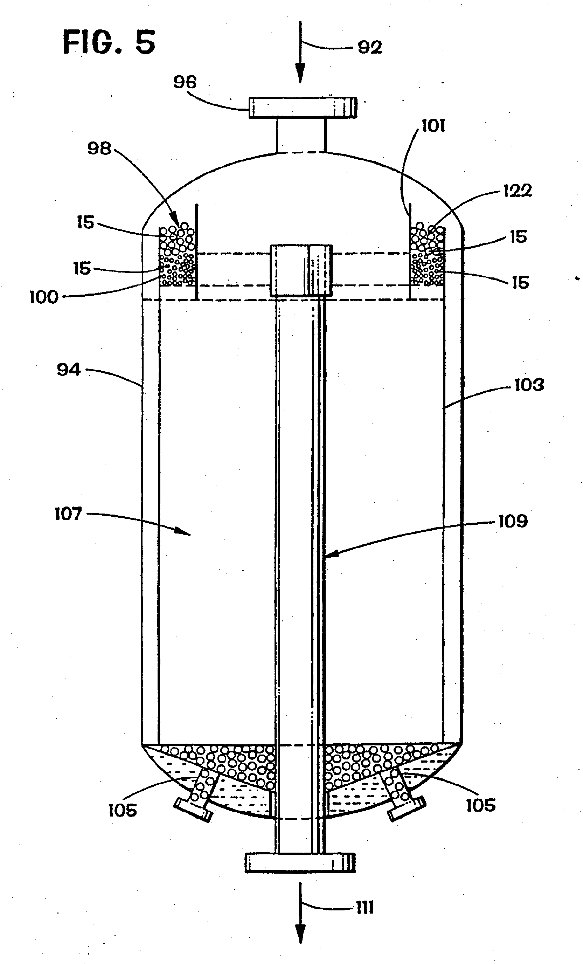

With reference to FIG. 5, for treatment of a contaminated organic-based feed in vapor form, a radial flow fixed bed chemical reactor 94 with reticulated ceramic material 15 in the shape of substantially spherical balls 122 (FIG. 11) is illustrated, although as previously discussed, other shapes may be used. The contaminated organic-based feed in vapor form 92 will enter the radial flow reactor 94 at the inlet 96. A layer 98 of reticulated ceramic material 15, more preferably layers 98, 100 of reticulated ceramic material 15, is provided in the vessel between the deflection baffle 101 and the scallop 103. The layers of 98, 100 reticulated ceramic material 15 aid in filtering contaminants such as entrained dirt, iron oxide, iron sulfide, asphaltenes, coke fines, catalyst fines, sediments, or other foreign particulate material entrained in the contaminated organic-based vapor feed 92 before reaction in the fixed catalyst bed 107 and discharge through the center pipe 109 as the reacted organic stream 111. Also as previously discussed, an advantage of the present invention is that the reticulated ceramic material 15 may be used to capture and retain catalyst from outlet streams, shown here in the unloading tubes 105.

FIG. 6 illustrates a specific embodiment of the present invention as a reticulated ceramic material disk 124. Optionally, the disks may have perforations 125. Preferably, multiple perforations are used to accommodate screen baskets which may optionally be filled with reticulated ceramic material. Other shapes may include saddles 126 (FIG. 7), hollow cylinders 128 (FIG. 8), single sheets 121 of reticulated ceramic material 15 (FIG. 9), disks 134 formed from a plurality of segments 134 a-g (FIG. 10), substantially spherical balls 122 (FIG. 11), solid cylinders 132 (FIG. 12), and raschig rings 130 (FIG. 13). Each shape may be sized to individual specifications. Sizes for the shapes used may include substantially spherical balls of about 3.2 to 50.8 mm (1/8 to 2 inch) diameters; raschig rings with inside diameters of about 3.2 to 25.4 mm (1/8 to 1 inch) and outside diameters of about 6.35 t0 38.1 mm (1/4 to 1 1/2 inches) and heights of about 6.35 to 50.8 mm (1/4 to 2 inches); saddle shapes with radii of about 6.35 to 50.8 mm (1/4 to 2 inches); hollow cylinders having inside diameters of about 3.2 to 31.75 mm (1/8 to 1 1/4 inches), outside diameters of about 6.35 to 50.8 mm (1/4 to 2 inches), and heights of about 6.35 to 76.2 mm (1/4 to 3 inches); and solid cylinders having diameters of about 3.2 to 25.4 mm (1/8 to 1 inch) and heights of about 6.35 to 50.8 mm (1/4 to 2 inches). Custom-made one-piece disks 124 or single sheet 121 construction may be custom-fit to the physical configuration of a reactor. A further feature of this aspect of the present invention is that the reticulated ceramic material 15 may be formed in either a disk 124 or single sheet 121 having perforations 125. An additional feature of the present invention is that the reticulated ceramic material when constructed may be formed into a plurality of segments in order to form an assembled sheet or disk that is custom-fit to the reactor's physical configuration. Porosities of the reticulated ceramic material range from 10 to 800 pores per 25.4 mm (10 to 800 ppi). Preferably, the pore distribution may range from about 10 to 80 pores per 25.4 mm (10 to 80 ppi). More preferably, the pore distribution may range from about 20 to 60 pores per 25.4 mm (20 to 60 ppi). This enables customization of the size and shape of the reticulated ceramic material 15 for the application, size, particulate loading and pressure drop constraints. The ceramic material surrounding the pores, or openings, of the reticulated ceramic material is from the web members 123 (FIG. 9) which in turn define the flow passageways 120 (FIG. 9).

It is to be understood that the invention is not to be limited to the exact details of construction, operation, exact materials, or embodiments shown and described, as obvious modifications and equivalents will be apparent to one skilled in the art. For example, special liquid distributors or conventional liquid distributors could be used to facilitate the spreading of the liquid across the catalyst bed; however, the reticulated ceramic material could be used only for particulate removal. Accordingly, the invention is therefore to be limited only by the scope of the appended claims.

## Claims

1. A method of fluid distribution in a chemical reactor comprising the steps of:
(a) providing a layer of reticulated ceramic material in the chemical reactor, the reticulated ceramic material having a plurality of web members defining a plurality of flow passageways through the reticulated ceramic material and the reticulated ceramic material having a pore distribution range of about 10 to 800 pores per linear 25.4 mm (per linear inch);
(b) contacting an organic-based liquid, organic-based vapour, or organic-based combination liquid and vapour feed stream with the layer of reticulated ceramic material;
(c) subdividing the organic-based liquid, organic-based vapour, or organic-based combination liquid and vapour feed stream into a plurality of smaller fluid steams by passing the organic-based liquid, organic-based vapour, or organic-based combination liquid and vapour feed stream through the plurality of flow passageways defined by the web members of the reticulated ceramic material;
wherein the organic-based liquid, organic-based vapour, or organic-based combination liquid and vapour feed stream is a contaminated organic-based feed stream and the method includes the steps of:
removing contaminants from the contaminated organic-based feed stream; and
providing a resultant decontaminated and uniformly spread organic-based feed stream to a catalyst bed for further processing in the chemical reactor.

2. The method of claim 1, wherein the contaminants comprise catalyst material from a fixed catalyst bed.

3. The method of claim 1, wherein the contaminants comprise sediments formed in a fixed catalyst bed.

4. The method of claim 1, wherein the fluid is the vapour feed stream flowing through a vapour inlet of the chemical reactor and the fluid distribution serves to streamline turbulent flow of the vapour prior to discharging the streamlined vapour feed stream into the chemical reactor.

5. The method of claim 4, wherein the vapour feed stream is air.

6. The method of claim 4, wherein the chemical reactor comprises a fluidised catalyst bed.

7. The method of claim 1, wherein the removal of contaminants from the contaminated organic-based feed stream includes the step of contacting the contaminated organic-based feed stream with the reticulated ceramic material to remove the contaminants from the contaminated organic-based feed steam.

8. The method of claim 7, wherein the step of contacting the contaminated organic-based feed stream with the reticulated ceramic material includes depositing a catalyst on the reticulated ceramic material prior to contacting the contaminated organic-based feed stream.

9. The method of any preceding claim, wherein the reticulated ceramic material has a pore distribution range of about 10 to 80 pores per linear 25.4 mm (per linear inch).

10. The method of any of claims 1 to 8, wherein the reticulated ceramic material has a pore distribution range of approximately 20 to 60 pores per linear 25.4 mm (per linear inch).

11. The method of claim 1, wherein the reticulated ceramic material is a plurality of substantially spherical shaped balls, each ball having a diameter range of about 3.2 to 50.8 mm (⅛ to 2 inches).

12. The method of claim 1, wherein the reticulated ceramic material is a plurality of raschig rings, each raschig ring having an inside diameter of about 3.2 to 25.4 mm (⅛ to 1 inch) and an outside diameter of about 6.4 to 38.1 mm (¼ to 1½ inches) and a height of about 6.4 to 50.8 mm (¼ to 2 inches).

13. The method of claim 1, wherein the reticulated ceramic material is formed into a plurality of saddle shaped pieces, each piece having a radius of about 6.4 to 50.8 mm (¼ to 2 inches).

14. The method of claim 1, wherein the reticulated ceramic material is formed into a single sheet.

15. The method of claim 14, wherein the reticulated ceramic material is formed having perforations.

16. The method of claim 1, wherein the reticulated ceramic material is formed into a single disk.

17. The method of claim 16, wherein the reticulated ceramic material is formed having perforations.

18. The method of claim 1, wherein the reticulated ceramic material is formed into a plurality of segments forming an assembled sheet when constructed, which is custom-fit to the reactor's physical configuration.

19. The method of claim 1, wherein the reticulated ceramic material is formed into a plurality of segments forming an assembled disk that, when constructed, is custom-fit to the reactor's physical configuration.

20. The method of claim 1, wherein the reticulated ceramic material is formed into a plurality of hollow cylinders, each hollow cylinder having an inside diameter of about 3.2 to 31.7 mm (⅛ to 1¼ inches) and an outside diameter of about 6.4 to 50.8 mm (¼ to 2 inches) and a height of about 6.4 to 76.2 mm (¼ to 3 inches).

21. The method of claim 1, wherein the reticulated ceramic material is formed into a plurality of solid cylinders, each solid cylinder having a diameter of about 3.2 to 25.4 mm (⅛ to 1 inch) and a height of about 6.4 to 50.8 (¼ to 2 inches).

22. The method of claim 1, wherein the chemical reactor is a hydrotreater.

23. The method of claim 1, wherein the chemical reactor is a hydrorefiner.

24. The method of claim 1, wherein the chemical reactor is a hydrocracker reactor.

25. The method of claim 1, wherein the chemical reactor is a reformer reactor.

26. The method of claim 1, wherein the chemical reactor is an alkylation reactor.

27. The method of claim 1, wherein the chemical reactor is an isomerization reactor.

28. The method of claim 1, wherein the chemical reactor is a polymerisation reactor.

29. The method of claim 1, wherein the chemical reactor is a fluidised bed reactor.

30. The method of claim 1, wherein the reticulated ceramic material comprises a substrate of reticulated ceramic material having a substantially uniform coating of a selected catalyst including a porous alumina coating with one Group VI-B metal.

31. The method of claim 30, wherein the Group VI-B metal is molybdenum.

32. The method of claim 1, wherein the reticulated ceramic material comprises a substrate of reticulated ceramic material having a substantially uniform coating of a selected catalyst including a porous alumina coating with one Group VIII metal.

33. The method of claim 32, wherein a Group VIII metal is nickel or cobalt.

34. The method of claim 1, wherein a Group VI-B metal is impregnated into the reticulated ceramic material.

35. The method of claim 1, wherein a Group VIII metal is impregnated into the reticulated ceramic material.

36. The method of claim 1, wherein the reticulated ceramic material comprises a porous inorganic oxide selected from the group consisting of alumina, silica, silica-alumina, magnesia, silica-magnesia and titania.

37. The method of claim 1, wherein the reticulated ceramic material comprises a metal oxide selected from the group consisting of titanium, tin, lead, zirconium, ruthenium, tungsten, yttrium, nickel, magnesium, calcium, aluminum, silicon or boron.

38. The method of claim 1, wherein the reticulated ceramic material comprises a metal nitride selected from the group consisting of titanium, zirconium, tungsten, silicon or boron.

39. The method of claim 1, wherein the reticulated ceramic material comprises a metal carbide selected from the group consisting of titanium, zirconium, tungsten, silicon or boron.

40. The method of claim 1, wherein the reticulated ceramic material comprises a metal boride selected from the group consisting of titanium, zirconium or tungsten.

41. The method of claim 1, wherein the reticulated ceramic material comprises a zeolite selected from the group consisting of zeolite L, zeolite X and zeolite Y.

## Patentansprüche

1. Verfahren zur Fluidverteilung in einem chemischen Reaktor, umfassend die Schritte
(a) Bereitstellen einer Schicht vernetzten keramischen Materials im chemischen Reaktor, wobei das vernetzte keramische Material eine Mehrzahl Netzglieder aufweist, die eine Mehrzahl Flussdurchlässe durch das vernetzte keramische Material definieren, und wobei das vernetzte keramische Material einen Porenverteilungsbereich von etwa 10 bis 800 Poren pro linearen 25,4 mm (pro linearen Zoll) hat;
(b) Zusammenbringen eines Zufuhrstroms aus organisch basierter Flüssigkeit, organisch basiertem Dampf oder organisch basierter Kombination aus Flüssigkeit und Dampf mit der Schicht vernetzten keramischen Materials;
(c) Unterteilen des Zufuhrstroms aus organisch basierter Flüssigkeit, organisch basiertem Dampf oder organisch basierter Kombination aus Flüssigkeit und Dampf in eine Mehrzahl kleinerer Fluidströme durch Führen der organisch basierten Flüssigkeit, des organisch basierten Dampfes oder der organisch basierten Kombination aus Flüssigkeit und Dampf durch die Mehrzahl von den Netzgliedern des vernetzten keramischen Materials definierten Flussdurchlässe;
wobei der Zufuhrstrom aus organisch basierter Flüssigkeit, organisch basiertem Dampf oder der organisch basierter Kombination aus Flüssigkeit und Dampf ein verunreinigter organisch basierter Zufuhrstrom ist und das Verfahren die folgenden Schritte aufweist:
Entfernen von Verunreinigungen aus dem verunreinigten organisch basierten Zufuhrstrom; und
Bereitstellen eines erhaltenen aufgereinigten und gleichmäßig verteilten organisch basierten Zufuhrstroms an ein Katalysatorbett zur weiteren Bearbeitung im chemischen Reaktor.

2. Verfahren gemäß Anspruch 1, wobei die Verunreinigungen Katalysatormaterial aus einem Festbettkatalysator umfassen.

3. Verfahren gemäß Anspruch 1, wobei die Verunreinigungen in einem Festbettkatalysator gebildete Sedimente umfassen.

4. Verfahren gemäß Anspruch 1, wobei das Fluid der Dampfstrom ist, der durch einen Dampfeinlass des chemische Reaktors strömt und die Fluidverteilung dazu dient, vor dem Auslassen des geglätteten Dampfzufuhrstroms in den chemischen Reaktor turbulente Strömung des Dampfes zu glätten.

5. Verfahren gemäß Anspruch 4, wobei der Dampfzufuhrstrom Luft ist.

6. Verfahren gemäß Anspruch 4, wobei der chemische Reaktor ein fluidisiertes Katalysatorbett umfasst.

7. Verfahren gemäß Anspruch 1, wobei das Entfernen von Verunreinigungen aus dem verunreinigten organisch basierten Zufuhrstrom den Schritt des Zusammenbringens des verunreinigten organisch basierten Zufuhrstroms mit dem vernetzten keramischen Material enthält, zum Entfernen von Verunreinigungen aus dem verunreinigten organisch basierten Zufuhrstrom.

8. Verfahren gemäß Anspruch 7, wobei der Schritt des Zusammenbringens des verunreinigten organisch basierten Zufuhrstroms mit dem vernetzten keramischen Material ein Absetzen eines Katalysators auf dem vernetzten keramischen Material enthält, vor dem Zusammenbringen des verunreinigten organisch basierten Zufuhrstroms.

9. Verfahren gemäß irgendeinem vorhergehenden Anspruch, wobei das vernetzte keramische Material einen Porenverteilungsbereich von etwa 10 bis 80 Poren pro linearen 25,4 mm (pro linearen Zoll) hat.

10. Verfahren gemäß irgendeinem der Ansprüche 1 bis 8, wobei das vernetzte keramische Material einen Porenverteilungsbereich von etwa 20 bis 60 Poren pro linearen 25,4 mm (pro linearen Zoll) hat.

11. Verfahren gemäß Anspruch 1, wobei das vernetzte keramische Material eine Mehrzahl im wesentlichen kugelförmiger Körner ist, wobei jedes Korn einen Durchmesserbereich von etwa 3,2 bis 50,8 mm (⅛ bis 2 Zoll) hat.

12. Verfahren gemäß Anspruch 1, wobei das vernetzte keramische Material eine Mehrzahl Raschig-Ringe ist, wobei jeder Raschig-Ring einen inneren Durchmesser von etwa 3,2 bis 25,4 mm (⅛ bis 1 Zoll) hat und einen äußeren Durchmesser von etwa 6,4 bis 38,1 mm (¼ bis 1½ Zoll) und eine Höhe von etwa 6,4 bis 50,8 mm (% bis 2 Zoll).

13. Verfahren gemäß Anspruch 1, wobei das vernetzte keramische Material in einer Mehrzahl sattelförmiger Teile ausgebildet ist, wobei jedes Teil einen Radius von etwa 6,4 bis 50,8 mm % bis 2 Zoll) hat.

14. Verfahren gemäß Anspruch 1, wobei das vernetzte keramische Material in einem einzelnen Blatt ausgebildet ist.

15. Verfahren gemäß Anspruch 14, wobei das vernetzte keramische Material mit Perforationen ausgebildet ist.

16. Verfahren gemäß Anspruch 1, wobei das vernetzte keramische Material in eine einzelne Scheibe ausgebildet ist.

17. Verfahren gemäß Anspruch 16, wobei das vernetzte keramische Material mit Perforationen ausgebildet ist.

18. Verfahren gemäß Anspruch 1, wobei das vernetzte keramische Material in einer Mehrzahl Segmente ausgebildet ist, die ein zusammengesetztes Blatt bilden, das, wenn konstruiert, passgenau für die physikalische Konfiguration des chemischen Reaktors ist.

19. Verfahren gemäß Anspruch 1, wobei das vernetzte keramische Material in einer Mehrzahl Segmente ausgebildet ist, die eine zusammengesetzte Scheibe bilden die, wenn konstruiert, passgenau für die physikalische Konfiguration des chemischen Reaktors sind.

20. Verfahren gemäß Anspruch 1, wobei das vernetzte keramische Material in einer Mehrzahl Hohlzylinder ausgebildet ist, wobei jeder Hohlzylinder einen inneren Durchmesser von etwa 3,2 bis 31,7 mm (⅛ bis ¼ Zoll) hat und einen äußeren Durchmesser von etwa 6,4 bis 50,8 mm (¼ bis 2 Zoll) und eine Höhe von etwa 6,4 bis 76,2 mm % bis 3 Zoll).

21. Verfahren gemäß Anspruch 1, wobei das vernetzte keramische Material in einer Mehrzahl voller Zylinder ausgebildet ist, wobei jeder voller Zylinder einen Durchmesser von etwa 3,2 bis 25,4 mm (⅛ bis 1 Zoll) hat und eine Höhe von etwa 6,4 bis 50,8 mm % bis 2 Zoll).

22. Verfahren gemäß Anspruch 1, wobei der chemische Reaktor eine HDS-Einheit ist.

23. Verfahren gemäß Anspruch 1, wobei der chemische Reaktor ein Hydroraffinierer ist.

24. Verfahren gemäß Anspruch 1, wobei der chemische Reaktor ein Hydrocracking-Reaktor ist.

25. Verfahren gemäß Anspruch 1, wobei der chemische Reaktor ein Reforming-Reaktor ist.

26. Verfahren gemäß Anspruch 1, wobei der chemische Reaktor ein Alkylierungsreaktor ist.

27. Verfahren gemäß Anspruch 1, wobei der chemische Reaktor ein Isomerisierungsreaktor ist.

28. Verfahren gemäß Anspruch 1, wobei der chemische Reaktor ein Polymerisierungsreaktor ist.

29. Verfahren gemäß Anspruch 1, wobei der chemische Reaktor ein Reaktor mit fluidisiertem Bett ist.

30. Verfahren gemäß Anspruch 1, wobei das vernetzte keramische Material ein Substrat aus vernetztem keramischen Material umfasst mir einer im Wesentlichen gleichmäßigen Beschichtung eines ausgewählten Katalysators, mit einer porösen Aluminiumoxydbeschichtung mit einem Metall der Gruppe VI-B.

31. Verfahren gemäß Anspruch 30, wobei das Metall der Gruppe VI-B Molybdän ist.

32. Verfahren gemäß Anspruch 1, wobei das vernetzte keramische Material ein Substrat aus vernetztem keramischen Material umfasst mir einer im Wesentlichen gleichmäßigen Beschichtung eines ausgewählten Katalysators, mit einer porösen Aluminiumoxydbeschichtung mit einem Metall der Gruppe VIII.

33. Verfahren gemäß Anspruch 32, wobei das Metall der Gruppe VIII Nickel oder Kobalt ist.

34. Verfahren gemäß Anspruch 1, wobei ein Metall der Gruppe VI-B im vernetzten keramischen Material imprägniert ist.

35. Verfahren gemäß Anspruch 1, wobei ein Metall der Gruppe VIII im vernetzten keramischen Material imprägniert ist.

36. Verfahren gemäß Anspruch 1, wobei das vernetzte keramische Material ein poröses anorganisches Oxyd umfasst, ausgewählt aus der Gruppe Aluminiumoxyd, Siliciumoxyd, Siliciumoxyd-Aluminiumoxyd, Magnesiumoxyd, Siliciumoxyd-Magnesiumoxyd und Titanoxyd.

37. Verfahren gemäß Anspruch 1, wobei das vernetzte keramische Material ein Metalloxyd umfasst, ausgewählt aus der Gruppe Titan, Zinn, Blei, Zirkon, Ruthenium, Wolfram, Yttrium, Nickel, Magnesium, Calcium, Aluminium, Silicium oder Bor.

38. Verfahren gemäß Anspruch 1, wobei das vernetzte keramische Material ein ein Metallnitrid umfasst, ausgewählt aus der Gruppe Titan, Zirkon, Wolfram, Silicium oder Bor.

39. Verfahren gemäß Anspruch 1, wobei das vernetzte keramische Material ein Metallcarbid umfasst, ausgewählt aus der Gruppe Titan, Zirkon, Wolfram, Silicium oder Bor.

40. Verfahren gemäß Anspruch 1, wobei das vernetzte keramische Material ein Metallborid umfasst, ausgewählt aus der Gruppe Titan, Zirkon oder Wolfram.

41. Verfahren gemäß Anspruch 1, wobei das vernetzte keramische Material ein Zeolit umfasst, ausgewählt aus der Gruppe Zeolit L, Zeolit X und Zeolit Y.

## Revendications

1. Un procédé de distribution de fluide dans un réacteur chimique comprenant les opérations suivantes :
(a) la fourniture d'une couche de matériau céramique réticulé dans le réacteur chimique, le matériau céramique réticulé possédant une pluralité de membrures définissant une pluralité de conduits d'écoulement au travers du matériau céramique réticulé et le matériau céramique réticulé possédant une plage de distribution de pores d'environ 10 à 800 pores par 25,4 mm linéaires (par pouce linéaire) ;
(b) la mise en contact d'un courant d'alimentation liquide à base organique, vapeur à base organique ou combiné liquide vapeur à base organique avec la couche de matériau céramique réticulé ;
(c) la subdivision du courant d'alimentation liquide à base organique, vapeur à base organique ou combiné liquide vapeur à base organique en une pluralité de courants de fluide plus petits par le passage du courant d'alimentation liquide à base organique, vapeur à base organique ou combiné liquide vapeur à base organique au travers de la pluralité de conduits d'écoulement définis par les membrures du matériau céramique réticulé ;
où le courant d'alimentation liquide à base organique, vapeur à base organique ou combiné liquide vapeur à base organique est un courant d'alimentation à base organique contaminé et le procédé comprend les opérations suivantes :
l'élimination des contaminants du courant d'alimentation à base organique contaminé ;
et
la fourniture d'un courant d'alimentation à base organique uniformément réparti et décontaminé résultant à un lit catalytique pour un traitement complémentaire dans le réacteur chimique.

2. Le procédé selon la revendication 1, où les contaminants contiennent un matériau catalytique provenant d'un lit catalytique fixe.

3. Le procédé selon la revendication 1, où les contaminants contiennent des sédiments formés dans un lit catalytique fixe.

4. Le procédé selon la revendication 1, où le fluide est le courant d'alimentation vapeur s'écoulant au travers d'une admission de vapeur du réacteur chimique et la distribution de fluide sert à rationaliser un écoulement turbulent de la vapeur avant la décharge du courant d'alimentation vapeur rationalisé dans le réacteur chimique.

5. Le procédé selon la revendication 4, où le courant d'alimentation vapeur est de l'air.

6. Le procédé selon la revendication 4, où le réacteur chimique comprend un lit catalytique fluidisé.

7. Le procédé selon la revendication 1, où l'élimination de contaminants du courant d'alimentation à base organique contaminé comprend l'opération de mise en contact du courant d'alimentation à base organique contaminé avec le matériau céramique réticulé de façon à éliminer les contaminants du courant d'alimentation à base organique contaminé.

8. Le procédé selon la revendication 7, où l'opération de mise en contact du courant d'alimentation à base organique contaminé avec le matériau céramique réticulé comprend le dépôt d'un catalyseur sur le matériau céramique réticulé avant la mise en contact avec le courant d'alimentation à base organique contaminé.

9. Le procédé selon l'une quelconque des revendications précédentes, où le matériau céramique réticulé possède une plage de distribution de pores d'environ 10 à 80 pores par 25,4 mm linéaires (par pouce linéaire).

10. Le procédé selon l'une quelconque des revendications 1 à 8, où le matériau céramique réticulé possède une plage de distribution de pores approximativement de 20 à 60 pores par 25,4 mm linéaires (par pouce linéaire).

11. Le procédé selon la revendication 1, où le matériau céramique réticulé est une pluralité de billes de forme sensiblement sphérique, chaque bille possédant une plage de diamètres d'environ 3,2 à 50,8 mm (1/8 à 2 pouces).

12. Le procédé selon la revendication 1, où le matériau céramique réticulé est une pluralité d'anneaux de Raschig, chaque anneau de Raschig possédant un diamètre intérieur d'environ 3,2 à 25,4 mm (1/8 à 1 pouce) et un diamètre extérieur d'environ 6,4 à 38,1 mm (1/4 à 1½ pouce) et une hauteur d'environ 6,4 à 50,8 mm (1/4 à 2 pouces).

13. Le procédé selon la revendication 1, où le matériau céramique réticulé est formé en une pluralité de pièces en forme de dos d'âne, chaque pièce possédant un rayon d'environ 6,4 à 50,8 mm (1/4 à 2 pouces).

14. Le procédé selon la revendication 1, où le matériau céramique réticulé est formé en une seule feuille.

15. Le procédé selon la revendication 14, où le matériau céramique réticulé est formé avec des perforations.

16. Le procédé selon la revendication 1, où le matériau céramique réticulé est formé en un disque unique.

17. Le procédé selon la revendication 16, où le matériau céramique réticulé est formé avec des perforations.

18. Le procédé selon la revendication 1, où le matériau céramique réticulé est formé en une pluralité de segments formant une feuille assemblée lorsqu'il est construit, qui est ajustée sur mesure à la configuration physique du réacteur.

19. Le procédé selon la revendication 1, où le matériau céramique réticulé est formé en une pluralité de segments formant un disque assemblé qui, lorsqu'il est construit, est ajusté sur mesure à la configuration physique du réacteur.

20. Le procédé selon la revendication 1, où le matériau céramique réticulé est formé en une pluralité de cylindres creux, chaque cylindre creux possédant un diamètre intérieur d'environ 3,2 à 31,7 mm (1/8 à 1 1/4 pouce) et un diamètre extérieur d'environ 6,4 à 50,8 mm (1/4 à 2 pouces) et une hauteur d'environ 6,4 à 76,2 mm (1/4 à 3 pouces).

21. Le procédé selon la revendication 1, où le matériau céramique réticulé est formé en une pluralité de cylindres solides, chaque cylindre solide possédant un diamètre d'environ 3,2 à 25,4 mm (1/8 à 1 pouce) et une hauteur d'environ 6,4 à 50,8 (1/4 à 2 pouces).

22. Le procédé selon la revendication 1, où le réacteur chimique est une unité d'hydrotraitement.

23. Le procédé selon la revendication 1, où le réacteur chimique est une unité d'hydroraffinage.

24. Le procédé selon la revendication 1, où le réacteur chimique est un réacteur hydrocraqueur.

25. Le procédé selon la revendication 1, où le réacteur chimique est un réacteur reformeur.

26. Le procédé selon la revendication 1, où le réacteur chimique est un réacteur d'alkylation.

27. Le procédé selon la revendication 1, où le réacteur chimique est un réacteur d'isomérisation.

28. Le procédé selon la revendication 1, où le réacteur chimique est un réacteur de polymérisation.

29. Le procédé selon la revendication 1, où le réacteur chimique est un réacteur à lit fluidisé.

30. Le procédé selon la revendication 1, où le matériau céramique réticulé contient un substrat d'un matériau céramique réticulé possédant un revêtement sensiblement uniforme d'un catalyseur sélectionné contenant un revêtement d'alumine poreux avec un métal du Groupe VI-B.

31. Le procédé selon la revendication 30, où le métal du Groupe VI-B est molybdène.

32. Le procédé selon la revendication 1, où le matériau céramique réticulé contient un substrat d'un matériau céramique réticulé possédant un revêtement sensiblement uniforme d'un catalyseur sélectionné contenant un revêtement d'alumine poreux avec un métal du Groupe VIII.

33. Le procédé selon la revendication 32, où le métal du Groupe VIII est nickel ou cobalt.

34. Le procédé selon la revendication 1, où le métal du Groupe VI-B est imprégné dans le matériau céramique réticulé.

35. Le procédé selon la revendication 1, où le métal du Groupe VIII est imprégné dans le matériau céramique réticulé.

36. Le procédé selon la revendication 1, où le matériau céramique réticulé contient un oxyde inorganique poreux sélectionné dans le groupe se composant d'alumine, silice, silice-alumine, magnésie, silice-magnésie et titane.

37. Le procédé selon la revendication 1, où le matériau céramique réticulé contient un oxyde métallique sélectionné dans le groupe se composant de titanium, étain, plomb, zirconium, ruthénium, tungstène, yttrium, nickel, magnésium, calcium, aluminium, silicium ou bore.

38. Le procédé selon la revendication 1, où le matériau céramique réticulé comprend un nitrure métallique sélectionné dans le groupe se composant de titanium, zirconium, tungstène, silicium ou bore.

39. Le procédé selon la revendication 1, où le matériau céramique réticulé contient un carbure métallique sélectionné dans le groupe se composant de titanium, zirconium, tungstène, silicium ou bore.

40. Le procédé selon la revendication 1, où le matériau céramique réticulé contient un borure métallique sélectionné dans le groupe se composant de titanium, zirconium ou tungstène.

41. Le procédé selon la revendication 1, où le matériau céramique réticulé comprend une zéolite sélectionnée dans le groupe se composant de zéolite L, zéolite X et zéolite Y.
